(19) Europäisches Patentamt

European Patent Office

Office européen des brevets

(11) **EP 0 764 670 A1**

(12) **EUROPEAN PATENT APPLICATION**

(43) Date of publication:
26.03.1997 Bulletin 1997/13

(51) Int. Cl.$^6$: **C08G 18/12**, C08G 18/40, C09J 175/04, C08K 7/26, C09K 3/10

(21) Application number: 95402146.5

(22) Date of filing: 25.09.1995

(84) Designated Contracting States:
AT BE CH DE DK ES FR GB GR IE IT LI LU MC NL PT SE

(71) Applicant: **MINNESOTA MINING AND MANUFACTURING COMPANY**
**Saint Paul Minnesota 55144-1000 (US)**

(72) Inventor: **Vincens, Hélène,**
**c/o 3M FRANCE**
**92500 Rueil Malmaison (FR)**

(74) Representative: **Warcoin, Jacques**
**Cabinet Régimbeau,**
**26, avenue Kléber**
**75116 Paris (FR)**

(54) **Reactive hot-melt adhesive and/or sealing composition**

(57)     The present invention relates to a reactive hot melt adhesive and/or sealing composition comprising a blend containing the following components :

(a) a first isocyanate-terminated prepolymer comprising the reaction product of an essentially semicrystalline hydroxy-functional material and a polyisocyanate, the semicrystalline material comprising a polyester polyol ;
(b) a second isocyanate-terminated prepolymer comprising the reaction product of a polyether diol and a polyisocyanate, the polyether diol comprising a polyalkylene oxyde glycol ;
(c) a third isocyanate-terminated prepolymer comprising the reaction product of a polyether triol and a polyisocyanate, the polyether triol comprising a polyalkylene oxyde polyether triol ; and
(d) cellular objects formed by a wall material consisting of a material selected from the group consisting of an inorganic silicate and/or an inorganic silica-aluminate alloy, wherein the cellular objects are in an amount of 35 to 45 % by volume based on total volume of the composition, and 8 to 14 % by weight based on the total weight of the composition.

## Description

This invention generally relates to reactive hotmelt adhesive and/or sealing compositions containing a particulate filler and particular polymer providing improved properties, especially useful viscosity and cure profile time of the composition as well as mechanical properties of the cured composition among other things. The invention also relates to a method of using such a sealing composition as a seam-sealer.

Compositions of the present invention have been designed in view to adjust certain physical characteristics of the material such as viscosity and other rheological features such as slumping, weight, toughness, flexibility, resilience, and so forth.

Fillers and reinforcing agents generally are selected to have such chemical and temperature resistance so that they might be unaffected by processing with either reactive or thermoplastic systems. However, in general, prior adhesive sealants are not thought to be entirely satisfactory. For instance, prior adhesive sealants do not have the capability of being shaped or tooled into intricate shapes and/or, if curable, the sealant material cures too slowly. Examples of such needed intricate shapes are seams observed where doorskins are attached to door frames on some new automobiles or the body side seam on some new models of leisure vans. Further, a fast curing adhesive sealant would be highly desirable, such as in the automotive aftermarket, so that as it can be handled more immediately after application without being too tacky, or leaving fingermarks, and so that it can be overpainted without delay.

Regarding previously proposed sealant formulations in more detail, U.S. Patent Nos. 4,214,019 and 4,252,712 to Donnermeyer et al. describe a block copolymer hot melt adhesive composition and a method for filling a cavity in a substrate with the adhesive. The adhesive composition contains a block copolymer, aluminum powder, glass fiber and hollow inorganic silicate microspheres. The microspheres are said to be required in a minor amount sufficient cause further increase in the melt viscosity with the amount limited so that flow and workability are not impaired. To meet these objectives, an amount microspheres of generally up to about 10 volume percent of the total composition is stated as being required.

As a slight variant to the above, U.S. Patent Nos. 4,214,019 and 4,217,376 to Donnermeyer et al. describe a block copolymer hot melt adhesive composition and a method for filling a cavity in a substrate with the adhesive, wherein the adhesive composition contains a block copolymer, particulate inorganic reinforcing agent, glass fiber and hollow inorganic silicate microspheres. Again, an amount microspheres of generally up to about 10 volume percent of the total composition is stated as being required. Also, the Donnermeyer et al. patents all relate to nonreactive adhesive systems.

U.S. Patent No. 4,388,424 to Kennell et al. describe an ambient or room temperature caulk or sealant composition that is extrudible or trowellable. The caulk or sealant composition contains an acrylic copolymer latex binder, glass microballoons, plasticizer, solvent, water adhesion promoters, mineral filler and/or coloring pigments, and the like. The microballons are said to increase the thermal insulation properties and decrease the shrinkage properties in the dried caulk seam as well as impart good extruding characteristic during application and curing of the caulk at ambient temperatures.

As known, setting or hardening of adhesives, including adhesive sealants, into a solid form occurs in three different basic ways: by cooling, by solvent removal, or by a chemical reaction. Of the three, it is generally understood that solvent-based adhesives, such as described by Kennell et al., typically suffer the greatest shrinkage during solidification (solvent removal). Such shrinkage can greatly undermine the performance of an adhesive sealant since the sealant needs to make and maintain intimate contact with the surfaces of the cavity or recess being filled. Kennell et al. does not relate to adhesive sealants which set by cooling and/or chemical reaction. Also, unlike hot melts, solvent-based sealant systems cannot be formulated as 100% solids, and thus have associated higher costs and ecological drawbacks.

U.S. Patent No. 4,005,033 to Geogeau et al. discloses a solvent-based pasty mastic adhesive or sealant containing organic hollow microspheres, preferably heat expandable thermoplastic spheres. Thermoplastic microspheres generally soften at too low a temperature to be applicable for hot melt applications. The use of thermosetting plastic microspheres in hot melts would be contraindicated due to the risk of the spheres reactivity in the system.

PCT Application WO 92/09503 to Garvey et al., published June 11, 1992, describes a microwave package contining a quantity of hot melt adhesive, where the hot melt adhesive may be of a type which is activatable without microwave susceptors, i.e., of a water retaining type, or may be of a type including microwave susceptors. The microwave susceptor particles include nonsusceptor particles, such as microbubbleo or flakeo, which are coated with a microwave susceptor layer including a metal or metal -oxide, -silicide, -boride and -phosphide. A hot melt adhesive is exemplified which is loaded with glass microbubbles coated with tungsten.

European Patent Applicant No. 0 455 400, published 6 November 1991 (Kangas et al.), and PCT Application WO 92/13017 (Kangas), each disclose an adhesive coating or sealant formulation formed of a blend of isocyanateterminated polyurethane prepolymers. In the case of Kangas et al, this blend consists essentially of a first isocyanate-terminated polyurethane based on the reaction product of a polyhexamethylene adipate and a polyisocyanate and a second isocyanate-terminated polyurethane based on the reaction product of poly (tetramethylene ether) glycol and a polyisocyanate. Kangas disclose a similar adhesive coating but also requiring a third prepolymer comprising the reaction product of an essentially amorphous hydroxy-functional material and polyisocyanate. Kangas et al. and Kangas each disclose the optional use of other adjuvants in amounts up to 50% weight of the composition either individually or alone. Examples of such adjuvants are listed as being chain extension agents, fillers, metal oxides, minerals, thermoplastic resins, plasticizers, antioxidants, pigments, U.V. absorbers, and adhesion promoters. As examples of fillers, Kangas et al. and Kangas each similarly list carbon black and glass, ceramic, metal or plastic bubbles; although no bubbles of any kind are demonstrated in the examples of either reference.

Also, conventional plastic (PVC) plumbing drain pipe and joint fixtures, e.g., ells, tees, and the like, are usually joined and sealed using solvent-based adhesives. The solvent-based adhesives set very rapidly and allow only a short period of time to accurately align of the fixtures before the adhesive sets. Also, the solvent-based adhesives have low viscosity and body which can make it difficult to fully seal the joint.

Also, in the conventional construction industry, there is a need for an adhesive and/or sealant which is flexible yet strong upon cure and has a relatively long open time to permit facile tooling in cracks between adjoining concrete slabs, boards, sheet rock, plywood and the like.

This invention relates to reactive hot-melt adhesive and/or sealing compositions containing a particulate filler providing improved toolability, wettability and cure profile times, among other things. The reactive hot melt adhesive/sealing compositions contain a blend of three isocyanate terminated polyurethane prepolymers and cellular objects, for example soda-lime borosilicate glass bubbles.

For doing this, the subject matter of the present invention consists in a reactive hot melt adhesive and/or sealing composition comprising a blend containing the following components :

(a) a first isocyanate-terminated prepolymer comprising the reaction product of an essentially semicrystalline hydroxy-functional material and a polyisocyanate, the semicrystalline material comprising a polyester polyol ;
(b) a second isocyanate-terminated prepolymer comprising the reaction product of a polyether diol and a polyisocyanate, the polyether diol comprising a polyalkylene oxyde glycol ;
(c) a third isocyanate-terminated prepolymer comprising the reaction product of a polyether trio] and a polyisocyanate, the polyether triol comprising a polyalkylene oxyde polyether triol ; and
(d) cellular objects formed by a material consisting of a material selected from the group consisting of an inorganic silicate and/or an inorganic silica-aluminate alloy, wherein the cellular objects are in an amount of 35 to 45 % by volume based on total volume of the composition, and 8 to 14 % by weight based on the total weight of the composition.

It is not thought that the field heretofore has disclosed the use, nor appreciated the advantages, that can be gained by filling hot melt adhesives and reactive or curing hot melt adhesive systems with hollow objects made of particular inorganic silicate in combination with using particular polymers.

The present invention provides reactive hot-melt adhesive compositions having a heat of crystallization ($\Delta$H) in joules/gram of -10 or lower, where particulate fillers of a certain type and amount are added effective to provide an overall thermal conductivity in the composition of less than 0.20 Watts per meter per degree Centigrade (Watts/m.°C).

Moreover, the present invention provides compositions which fulfill the various contradictory requirements of customers i.e., compositions having a short cure time but wherein the combination of the viscosity and cure time is such that the time of brushability and the tack-free time are sufficient, generally about 10 to 20 minites for a user friendly application of the composition.

For purposes of this application, the terms below have the following meanings :

"hot melt adhesive" means a polymeric composition which is a solid at room or ambient temperature (20° to 30°C), which melts to a viscous yet flowable liquid state when heated, and, upon cooling, sets into a firm solid state ;

"reactive", as used to further characterize a hot melt adhesive, means a hot melt adhesive material containing at least two different co-reactive monomers, oligomers or prepolymers capable of being polymerized after application to a substrate to form a threedimensional polymeric network ;

"curable" has the same meaning as "reactive" ;

"prepolymer" means a polymer having a number average molecular weight less than the entaglement molecular weight ;

"particulate" means a flowable material is characteri zed as formed of separate fine sol id particles, inclusive of hollow solid particles ;

"filler" means a particulate material generally possessing such temperature resistance that it is unaffected by processing with reactive polymeric systems ;

"cellular" means an object having a solid wall or walls enclosing partially or completely at least one cavity or space ;

"wetting" means the process in which a liquid spontaneously adheres to and spreads on a solid surface ;

"brushable" means the capability of an applied bead of adhesive or sealant to be shaped out of its original form with pressure exerted by a nylon brush ;

"tack-free" means that there is no further product transfer to the fingers when the product is handled ;

"thermal conductivity" or "$\lambda$" means the heat passing, in unit time, through unit cross-sectional area of a substance when there is unit temperature gradient between the opposite faces. $\lambda$ is measured according to industrial standard ASTM C 518 ; and

"heat of crystallization" or "$\Delta H$" means the quantity of heat liberated (negative values) or adsorbed (positive values) upon crystallization in joules/gram of the composition. $\Delta H$ is measured according to industrial standard ASTM E 793 using a Perkin-Elmer #7 series Thermal Analysis System.

The reaction adhesive/sealant composition of the present invention provided with an overall thermal conductivity in the composition of less than 0.20 Watts/m.°C by virtue of the added filler shows many advantages, including improved wettability, adherability, flexability and brushability over adhesives filled with conventional fillers, such as calcium carbonate.

Also, the use of types of fillers, for example, hollow inorganic silicate (glass) objects, in amounts providing an overall thermal conductivity in the adhesive/sealant composition of less than 0.20 W/m.°C, provides unexpectedly improved heat transfer control to provide reduced back melting with "melt-on-demand" capability, i.e., the adhesive/sealant melts more quickly with less back-melting, and less sag due to lower density. These advantages are realized such as where the adhesive/sealant of the present invention is loaded in stick form or cartridge form in a dispenser gun and applied in a melted state to a substrate. The adhesive has improved wettability and, thus, it can be more facilely spread and brushed out into the desired configuration over a substrate. These advantages, are attributable, at least in part, to the use of fillers as an additive to the adhesive providing the thermal conductivity value of less than 0.2 W/m.°c. These fillers impart unexpectedly advantageous thermal properties as compared to metal spheres, metal-coated glass bubbles, and the like without impairing the adherability (tack) of the adhesive. Also, the glass bubbles do not separate out of the adhesive system and reduce the cost of the adhesive. Further, as the adhesive/sealant of the present invention can be used as 100% solids, and thus avoids problems associated with the use of solvent.

It is thought that upon application and cooling of the adhesive/sealant composition of the present invention from a molten state that the heat of crystallization, also known as the enthalpy of fusion, of the semi-crystalline adhesive component provides a source of heat, which in combination with low thermal conductivity of the particulate filler, extends the open time of the adhesive facilitating polymer orientation processes taking place at the substrate surface which increase the strength of the adhesive bond. However, the presence of filler such as glass bubbles in this adhesive system imparts improvements thereto. While not desiring to be bound by any theory at this time, the particulate filler is thought to behave like a slow drying solvent in extending the mobility of the polymer chains as they slowly come together and interact as the solvent evaporates from the coating. Examples of such polymer orientation and wetting processes include, but are not limited to, the displacement of air from, and filling of the micro-contours of the substrate surface by, liquid adhesive, and the orientation of adhesive molecules near the surfaces of both the substrate and reinforcing filler particles. The particulate, reinforcing filler reduces adhesive density, thermal conductivity, and cost while increasing adhesive strength.

The adhesive/sealant composition of this invention, as filled by the aforesaid filler providing an overall thermal conductivity in the adhesive/sealant composition of less than 0.20 W/m.°c involves a blend of isocyanateterminated polyurethane prepolymers having an overall crystallization temperature of from about 25°C to about 70°C and a heat of crystallization in joules/gram of -10 or lower.

In this embodiment, the adhesive blend comprises (a) a first prepolymer which is the reaction product of an at least essentially semicrystalline hydroxy-functional material and a polyisocyanate and (b) and (c) a second and third prepolymers which are reaction products of an at least essentially amorphous hydroxy-functional polyether polyol materials and a polyisocyanate. The semicrystalline material, in addition to serving as a heat source, adds strength to the adhesive by virtue of crystalline bonds between and within the polymer molecules comprising the semi-crystalline material.

The polyether polyols impart flexibility and lowers brittleness. The adhesive blend (a) (b) and (c) is loaded with the particulate filler (d). This adhesive blend cures upon exposure to water moisture and/or vapor. In one preferred embodiment, the blended adhesive composition has components (a), (b) and (c) present in the weight proportions of: 6 to 37% (a), and 27 to 80% (b) + (c), with the proviso that the sum of (a)+(b)+(c)+(d) equals 100% , and the weight ratio of (b)+(c)/(a) is greater than 1.2 and (c)/(b) equals 1/5. The filled adhesive/sealant composition of the invention preferably has a time open to brushing of from 5 to 10 minutes before cure.

Further, the adhesive/sealant composition of this invention is extremely versatile and can be used to bond a wide variety of substrate materials including metal, wood, concrete, cellulosic paper, plasterboard, sheet rock, and plastics such as polyvinyl chloride ("PVC"), polystyrene, and acrylonitrile-butadienestyrene (ABS) rubbers under a wide variety of conditions. In one embodiment, the reactive hot melt system system is effective to bond plastic (e.g. PVC) plumbing and drain fixtures. In another embodiment, the reactive system is is useful in the building construction field such as a sealant applied into crevices between adjoining pieces of sheet rock and tooled smooth, or to bond wood paneling, or as a sealant/adhesive for fiber board and particle board products. As the reactive hot melt sysytem of the present invention is substantially nonshrinkable upon and after cure, it especially well-suited for filling of crevices and holes in substrates which filled adhesive/sealant can be tooled smooth with the adjoining substrate surfaces before cure.

Other features, advantages, and further methods of practicing the invention will be better understood from the following description of the preferred embodiments of the present invention.

Reactive hot melt adhesive systems, such as reactive hot melt urethane systems, can combine the rapid set or crystallization times of conventional nonreactive hot melt adhesives with the high bond strengths of a curing system. For example, like conventional hot melts, the reactive hot melt urethane adhesives are solid at room temperature (about 25°C), melt to a viscous liquid when heated to moderate temperatures (82°-121°C), and are applied in the molten state. The adhesive then cools to a solid state to provide initial bond strength. The urethane-based reactive hot melt systems, in particular, are superior to conventional noncuring hot melt adhesives which lack resistance to solvents and heatt have lower bond strengths, and which creep under load because they are non-curing.

However, it has been observed that prior reactive hot melt adhesive caulks and sealants, in particular, have peculiar difficulties in terms of back-melt problems in the delivery device, poor wetting characteristic, poor adhesion if tooling is not performed immediately, and long cure time requirements. It has been discovered that the inclusion of filler providing an overall thermal conductivity in the adhesive/sealant composition of less than 0.20 W/m.°c in reactive hot melt adhesive systems having a heat of crystallization in joules/gram of -10 or lower provides heretofore unreported control over the thermal and curing properties of the adhesive. For instance, while not desiring to be bound by theory, it nonetheless is believed that the extended brushability time achieved by the glass bubble filled adhesives of this invention provides additional time for the prepolymer adhesives to orient at the adhesivesubstrate interface; thereby increasing the strength of the adhesive bond to the substrate among other advantages.

In general, the particulate filler includes cellular glass or ceramic materials loaded into the adhesive in an amount of 35 to 45 % by volume of the total volume of the adhesive system. In the invention, the particulate filler is devoid of any thermoplastic or thermosetting materials. For example, thermoplastic bubbles can be undesirable as being too susceptible to heat damage from the heat of the molten adhesive and during cure. On the other hand, thermosetting bubbles can be undesirable as they can interfere with the cure reaction mechanism of the adhesive in manners which cannot be controlled.

One preferred filler is glass bubbles. If the amount of glass bubble filler becomes less than 35% volume of the overall adhesive/sealant composition, the peel adhesion property of the adhesive/sealant tends to become unsatisfactorily low. Beyond 45 % of glass bubbles the viscosity tends to become higher and the brushability and tack-free time tend to be lower. The glass bubbles are selected of a material and wall thickness and are added in an amount to provide a thermal conductivity of less than 0.20 W/m.°C, when added in amounts of from 35 to 45% by volume. The glass bubble material can be an alkali or alkaline silicate material. The glass bubbles have a specific gravity of from about 0.1 to about 2.2, and a bulk density of about 0.1 to about 0.90 g/cc. The average wall thickness of the glass bubbles can be in the range of 0.5 to 2.0 micrometers. The glass bubble particle size can be from about 5 to 125 micrometers. The microballons are preferably less than 80 microns in external diameter. Smaller diameters can raise the viscosity of the adhesive to levels difficult to handle and tool. Again, the glass bubbles are used in amount sufficient to constitute about 35 to about 45 volume percent based on total volume of the adhesive and additives, inclusive of the glass bubbles.

Suitable glass bubbles as the filler used in the adhesive composition of the present invention include soda-lime-borosilicate glass bubbles having the trade designation Scotchlite® K-20 Glass Bubbles and are available from 3M Company, Saint Paul, MN 55144. The Scotchlite® K-20 glass bubbles are about 60 micrometers in external diameter and have a specific gravity of 0.20.

Another suitable glass bubble filler has the trade designation Scotchlite® S-22 glass bubbles, available from 3M Company, Saint Paul, MN 55144. Scotchlite® S-22 glass bubbles are soda-limeborosilicate glass bubbles of about 30 micrometers in external diameter and having a specific gravity of 0.22. Yet another suitable glass bubble filler has the trade designation Scotchlite® S-60 Glass Bubbles, available from 3M Company, Saint Paul, MN 55144. Scotchlite® S-60 Glass Bubbles are soda-lime-borosilicate glass bubbles of about 30 micrometers in external diameter and having a specific gravity of 0.60.

The filler can also be a ceramic material. For example, suitable ceramic filler include filler having the trade designation Zeeospheres® type 850 and available from Zeelan Industries, Inc. Saint Paul, MN 55101. Zeeospheres® type 850 are hollow, ceramic (silica-alumina alloy) spheres with relatively thick walls having a median particle size (by total population) of 17 micrometers in external diameter. Another suitable ceramic filler has the trade designation Z-Light® W-1012 spheres also available from Zeelan Industries, Inc. Saint Paul, MN 55108. Z-Light® W-1012 are hollow, ceramic (silica-alumina alloy) spheres having an average particle size of 100 micrometers in external diameter and a specific gravity of 0.7. Low density ceramic spheres containing a multiplicity of minute, independent, closed air cells surround by a tough outer shell are useful, such as the filler having the trade designation Macrolite® ML 3050 and available from 3M Company, Saint Paul, MN 55144, which have a median particle size of about 450 micrometers in external diameter.

As to the reactive hot melt curable resins, the resin should have a crystallization temperature of between about 25°C to about 70°C. Also, the reactive hot-melts contemplated for use in the present invention have a heat of crystallization in joules/gram of -10 or lower (meaning -10 and negative values greater in absolute magnitude than the integer). The reactive hot melt versions of the adhesive-sealant of the present invention can be light-curing, moisture-curing or heat-curing when they meet the aforesaid crystallization temperature.

The compositions according to the present invention have a viscosity at 120°C between 30 000 to 100 000 centipoises, preferably between 40 000 to 70 000.

As one illustration of suitable resin for the present invention, there is a blend of certain isocyanate-terminated polyurethane prepolymers which provide a moisture-curable hot-melt adhesive system and the blend comprises a first, second and third prepolymers. Each of the first, second and third prepolymers comprises the reaction product of a hydroxy-functional material and a polyisocyanate.

More particularly, the first prepolymer comprises the reaction product of an at least essentially semicrystalline hydroxy-functional material and a polyisocyanate. By "essentially semicrystalline" it is meant that the first hydroxy-functional material exhibits both a crystalline melting temperature (Tm) and a glass transition temperature (Tg). The at least essentially semicrystalline hydroxy-functional material preferably has an essentially linear, saturated, aliphatic structure, a crystalline melting temperature between about 5°C and 120°C (more preferably between about 40°C and 105°C), a glass transition temperature less than about 0°C, and has a heat of crystallization (ΔH) of lower than -10 joules per gram. Included within the scope of "at least essentially semicrystalline" materials are those materials which may be regarded as essentially crystalline.

The polyester polyol used to prepare the first prepolymer typically has a number average molecular weight (Mn) of at least about 1000, preferably at least between about 1000 and about 5000, and most preferably between about 1500 to about 3000. At a Mn below about 1000, the resultant prepolymer is soft and may lack cohesive strength in the uncured state. At a Mn above about 5000, the resultant prepolymer tends to be viscous which increases the difficulty of depositing acceptably thin lines of adhesive on a substrate.

The hydroxy-functional material of the first prepolymer is provided in the form of a polyester polyol, it may comprise the reaction product of a polyol, for example, a diol, and a polyacid, for example, a dicarboxylic acid.

The at least essentially semicrystalline hydroxyfunctional material may comprise the reaction product of an aliphatic diol having from about 2 to 10 methylene groups and a dicarboxylic acid having from about 2 to 10 methylene groups. Diols useful in forming the at least essentially semicrystalline hydroxy-functional material may comprise, for example, those having from 2 to 10 methylene groups such as ethylene glycol, 1,4-butanediol, 1,5-pentanediol, 1,6-hexanediol, 1,8-octanediol, and 1,10-decanediol. Cycloaliphatic diols such as, for example, 1,4-cyclohexanediol and 1,4cyclohexanedimethanol may also be employed.

Dicarboxylic acids useful in preparing the hydroxy-functional material of the first prepolymer includet for example, those having from about 2 to 10 methylene groups such as succinic acid, glutaric acid, adipic acid, sebacic acid, azelaic acid, and 1,12-dodecanedioic acid, derivative thereof, and mixtures thereof. Included within the scope of useful acids are acid derivatives such as acid anhydrides, acid halides, and alkyl esters such as, for example, the methyl and ethyl esters.

Suitable essentially semicrystalline polyester polyols useful in the invention include, for example, polyhexamethylene adipate, polybutylene adipate, polyepsilon-caprolactone, and combinations thereof. Preferably, the essentially semicrystalline polyester polyol is polybutylene adipate and most preferably, 1,4-polybutylene adipate.

Examples of commercially available essentially semicrystalline polyester polyols useful in the invention include, for example, FORMREZ ER 262, an adipate polyester diol (poly [1,4 butylene adipates] (OH = 37.8) available from Witco Chemical Company; RUCOFLEX S102-35 from RUCO Polymer Corporation, LEXOREZ 1150-55 from INOLEX Chemical Corporation, FORMREZ F-930 fro mWITCO S.A. and combinations or mixtures thereof.

It has been noted hereinabove that the semicrystalline polyester polyols may be defined in part with reference to whether they display a Tg and/or a Tm. The presence and/or absence of a glass transition temperature and a crystalline melting point are techniques often used to characterize semicrystalline and amorphous (glassy) polymers. The two thermal transitions, Tg and Tm, can be quantitatively determined by measuring changes in specific volume and heat capacity through accepted analytical procedures such as differential scanning calorimetry (DSC). More particularly, Tg and Tm were measured with a Perkin-Elmer 7 Series Thermal Analysis System programmed to scan at a rate of 20°C/min. The midpoint of the endothermic peak was considered to be the Tg. Tm was considered to be the temperature at the apex of the endothermic peak. These techniques are described more fully in Thermal Characterization of Polymeric Materials, edited by Edith A. Turi (published 1981 by Academic Press, York).

The preferred polyether diol of the invention is a polyoxyalkylene polyol where the alkylene is $C_2$-$C_3$. Representative polyoxy $C_2$-$C_3$ alkylene polyols include poly(1,2 and 1,3propylene oxide) glycol ethylene modified. A suitable commercial source of polyoxyalkylene diol for use in this invention as the essentially amorphous material in the adhesive are the "POLY G" polyether diol series from Olin Corp. Among this series, there are "Poly G 55-112" having a molecular weight of 1,000; "POLY G 55-56" which is a 2000 MW polyether diol with 70-88% primary -OH's; "POLY G 55-37" having a molecular weight of 3,000; "POLY G 55-28" having a molecular weight of 4,000. Other useful polyether diols are CARADOL ED56-07 from SHELL Chemicals, CARADOL ED52-04 from SHELL Chemicals and ARCOL 1025-A having a molecular weight of 4,000 from ARCO Chemicals. One preferred hydroxy-functional material for the second prepolymer is the polypropylene oxide ether glycol ethylene oxide modified Poly G 55 - 56 (2000 MW polyether diol/ 70 - 88% primary-OH, Olin Corp.

One preferred hydroxy-functional material for the third prepolymer is a polyalkylene oxide polyether triol and more preferably polypropylene oxide polyether triol ARCOL-1072-A (6 000 MW polyether tril from Arco). Examples of commercially available polyethers triols useful in the invention include, for example ARCOL 1074-A (6000 MW) available from ARCO Chemicals. The "Poly G 85-28" reactive triol from OLIN Chemicals and CARADOL ET 27-06 from SHELL Chemicals.

Polyisocyanates which can be reacted with the hydroxy-functional materials to form the first, second and third prepolymers used in one preferred embodiment of the instant invention may be aliphatic or aromatic. Preferably, they are aromatic diisocyanates such as diphenylmethane-2,4'-diisocyanate and/or diphenylmethane 4,4'-diisocyanate (MDI); tolylene-2,4diisocyanate and -2,6-diisocyanate (TDI) and mixtures thereof. Other examples include: naphthylene-1,5-diisocyanate; triphenylmethane-4,4',4''-triisocyanate; phenylene-1,3-diisocyanate and 1,4-diisacyanate; dimethyl-3,3'-biphenylene-4,4'-diisocyanate; diphenyliso-propylidine-4,4'-diisocyanate; biphenylene diisocyanate; xylylene-1,3-diisocyanate and xylylene1,4-diisocyanate.

A list of useful commercially available polyisocyanates is found in the Encyclopedia of Chemical Technology, Kirk-Othmer, 2nd Ed., vol. 12, pp. 46-47, Interscience Pub., N.Y. (1967X, which is incorporated herein by reference. Especially preferred isocyanates include diphenylmethane-4,4'-diisocyanate and its isomers and mixtures thereof.

Isocyanate-functional derivative(s) of MDI and TDI may be used, such as liquid mixtures of the isocyanatefunctional derivative with melting point modifiers (e.g., mixtures of MDI with polycarbodiimide adducts such as ISONATE 143L, commercially available from Dow Chemical Company). Small amounts of polymeric diphenylmethane diisocyanate, preferably 10% or less by weight of the total isocyanate components, (e.g., PAPI, and the series PAPI 20, commercially available from Dow Chemical Company, the MONDUR M, MR and MRS series of isocyanates commercially available from Mobay Chemical Corp., and RUBINATE M, commercially available from ICI Chemicals, Inc.) may be included. Blocked isocyanate compounds formed by reacting aromatic isocyanates or the above-described isocyanate-functional derivatives with blocking agents such as ketoximes and the like are also included within the invention. Such blocked isocyanate-functional derivatives will, for convenience, be regarded herein as isocyanatefunctional derivatives of MDI and TDI.

The composition preferably contains the polyether polyols and polyester polyol in a weight ratio of 15:85 to 85:15, respectively more preferably, 25:75 to 75:25.

If the amount of polyether polyols exceeds 85 per 100 parts of the combined polyether polyols and polyester polyol, the adhesive properties are adversely affected and decreased. On the other hand, if the amount of polyester polyol exceeds 85 per 100 parts of the combined polyether polyols and polyester polyol, the adhesive/sealant crystallizes too rapidly and handling time becomes unsatisfactorily shortened.

The prepolymers useful herein may be prepared by techniques that are well known in the art. For example, prepolymers suitable in the invention may be formed by reacting a mixture of the hydroxy-functional polymers and the polyisocyanate(s) in a suitable vessel. Alternatively, the prepolymers may be prepared by reacting each of the hydroxy-functional polymers separately with the polyisocyanate(s) followed by blending of the resultant prepolymers. Still further, the prepolymers may be prepared by forming one prepolymer and subsequently forming the other prepolymer or prepolymers in the first.

Typically, the components are mixed at an elevated temperature using conventional mixing techniques. It is preferred to mix the components under anhydrous conditions. Generally, the prepolymers are prepared without the use of solvents although solvents may be employed if desired.

The isocyanate equivalents should be present in the reaction mixture in an amount greater than the hydroxyl equivalents. The equivalent ratio of isocyanate-to-hydroxyl (NCO/OH), sometimes referred to hereinafter as the isocyanate index, is preferably from about 1.2/1 to about 10/1 and especially preferably from about 1.3/1 to 2.2/1.

Also, the inventive adhesive compositions may include an effective amount of catalyst or reaction accelerator such as tertiary amines; metal-organic compounds, such as dibutyl tin dilaurate; co-curatives, and the like. An effective amount of a catalyst is preferably from about 0.005 to 2 percent by weight of the total prepolymer weight. More preferably, the catalyst is present at a level of about 0.01 to about 0.5 percent, based on the total weight of the prepolymers employed. Preferred catalysts are tertiary amines. Especially preferred catalysts are the tertiary amines known as bis [2-(N,N-dialkylamino)alkyl]ether(s) (sometimes known as "bis ethers"). Suitable bis ethers are described, for example, in U.S. Pat. No. 3,330,782, and include, for example, bis [2(N,N-dimethylamino)ethyl] ethers [2-(N,Ndimethylamino)-1-methylethyl]ether, and 2-(N,Ndimethylamino)ethyl-2-(N,N dimethylamino)-1-methylethyl ether. A preferred bis ether is bis [4, 4'morpholino)-2-ethyl]ether (DMDEE) commercially available from Texaco Chemical Company, Houston, TX 77227, under the designation TEXACAT DMDEE.

The modes of application of the adhesive formulations of the present invention include hand-held guns and valved dispensing nozzles.

Sodium borate exudes from the surfaces of borosilicate glass microballoons when used as the particulate filler. Therefore, in the practice of the present invention, a strong acid, such as phosphoric acid or sulfuric acid, should be added to the adhesive formulation to inhibit the alkalinity imparted by the sodium borate to prevent an undesired problem of inadvertent isocyanate trimerization in the adhesive otherwise caused by the presence of the sodium borate in the adhesive composition. For example, about 0,8 gram to about 3.2 grams of 86.7% J.T. Baker reagent grade phosphoric acid per kg of the unfilled adhesive is used in this regard. The amount of phosphoric acid can vary depending on the weight amount of borosilicate glass bubbles employed in the adhesive. For example, at a lower addition level of from about 10 to about 20% by weight borosilicate bubbles based on the total weight of filled adhesive, the phosphoric acid is added in amounts of about 0,8 gram per kg of unfilled adhesive, while, at an upper addition level of from about 35% to about 45% by weight borosilicate glass bubbles based on total weight of filled adhesive, the phosphoric acid is added in amounts of about 3 grams per kg of unfilled adhesive, to ensure that the alkalinity inhering to the borosilicate bubble material is adequately neutralized. Also, it is preferrable to add trace amounts of moisture scavengers to the strong acids, if used. Suitable moisture scavengers include molecular sieves, suc as zeolite, and anhydrides compounds such as maleic anhydride or acetic anhydride.

Other ingredients or adjuvants also may be employed with the blends of the invention to impart to or modify particular characteristics of the composition but only to the extent that the additives do not interfere with or prevent the composition from achieving the physical properties of a thermal conductivity of less than 0.2 W/m.°C and a heat of crystallization of -10 grams/joule or lower. These ingredients are included in the overall blends or mixtures of the invention rather than being incorporated into the constituent components thereof. The adjuvants should be added only at a level that does not materially adversely interfere with the adhesion of the composition. The adjuvants may comprise up to 50 weight percent of the composition either individually or in combination. For example, chain-extension agents (e.g., short chain polyols such as ethylene glycol or butanediol); fillers (e.g., carbon black); metal oxides such as zinc oxide; and minerals such as talc, clays, silica, silicates, and the like), thermoplastic resins; plasticizers; antioxidants; pigments; U.V. absorbers; and adhesion promoters such as silanes, and the like may be included to modify set time, open time, green strength build-up, tack, flexibility, adhesion and the like.

In one embodiment the composition comprises:

(a) a first isocyanate-terminated prepolymer comprising the reaction product of a semicrystalline polybutylene adipate consisting in a FORMREZ ER 262® of 3 000 MW and diphenyl methane diisocyanate ;
(b) a second isocyanate-terminated prepolymer comprising the reaction product of a reactive polyether diol consisting in a poly G55-56® of 2 000 MW and diphenyl methane diisocyanate ; and
(c) a third isocyanate-terminated prepolymer comprising the reaction product of a polyether triol consisting in a ARCOL-1072-A® of 6 000 MW and diphenyl methane diisocyanate ; and
(d) K20 glass bubles.

In one embodiment the composition is obtainable from the following components in the following weight proportions of : 20 to 25 % of polybutylene adipate, 40 to 50 % of polyether diol, 5 to 10 % of polyether triol, 10 to 15 % of diphenyl methane diisocyanate, 0.1 to 0.3 % of catalyst, 10 to 12 % of K20 Glass bubles, and 0.05 to 0.1 % of phosphoric acid.

Other characteristics and advantages of the present invention will be apparent from the following examples.

## EXAMPLES

All parts, percentages, ratios, and the like, are by weight in the following examples unless indicated otherwise.

General Preparation Procedure for the Isocyanate-Terminated Prepolymers

4,4'-Diphenylmethane diisocyanate (MDI) was added to a 500 ml - four (4) neck resin flask fitted with a gas inlet, gas outlet, stirrer and thermometer. The MDI was heated to 60°C until completely melted with efficient stirring under a nitrogen atmosphere. After the MDI was melted, the hydroxy-functional materials were added sequentially (although their addition as a premixed blend also is within the scope of the invention). All the hydroxy-functional materials have been (prior to their adding) predried overnight at approximatively 90°C under vacuum, and the phosphoric acid has been weighted in one of these hydroxy-functional materials; preferentially, the polyether glycol. That is, the preferred order of addition is the essentially semicrystalline polyester polyol, and then the polyether triol and then the polyether glycol; although this sequence can be reversed. In any event, for purposes of the examples described herein, the semicrystalline polyester polyol was added first followed by adding the polyether triol and then the polyether diol. Five minutes of mixing at 110°C under a dry nitrogen purge were conducted after the addition of each of the semicrystalline polyester polyol and the polyethers polyol. Then, 4,4'(oxydi-2,1-ethanediyl) bis-morpholine (TEXACAT DMDEE, an endcapping and cure promoting catalyst available from Texaco Chemical Co.) was added. The reaction was then conducted and maintained throughout at a heated temperature 110°C and under a dry nitrogen purge for about 45 minutes. A particulate filler then was added to the above mixture at 100°C in a four neck glass flask fitted with a stirrer, nitrogen inlet and outlet, and thermometer, and mixed for 40 minutes and degassed. Then, the resulting mixture was poured into nitrogen-purged 310 ml aluminum cartridges which were then sealed.

A series of isocyanate-terminated prepolyners was made generally as described above in the General Preparation Procedure. The specific components and their amounts of addition are described below. The prepared compositions were tested for various properties.

Example 1

A prepolymer was prepared with the components and protocol indicated in table 1 and weight proportions indicated in table 2.

Table 1

| Addition sequence | Amount (grams) | Component |
|---|---|---|
| 1 | 24.3 | Desmodur 44M [1] |
| 2 | 45.0 | Formrez ER 262 [2] |
| 3 | 17.6 | Arcol 1072-A [3] |
| 4 | 87.5 | Poly G55-56 [4] |
| 5 | 0.15 | $H_3PO_4$ [5] |
| 6 | 0.35 | DMDEE [6] |
| 7 | 22.5 | K20 Glass bubles [7] |

(1) Diphenyl methane-4,4'-diisocyanate (MDI) available from Bayer AG. D-5090 Leverkussen;
(2) Adipate polyester diol [poly(butylene)adipate] having a hydroxyl number of 37.8, available from Witco S.A.;
(3) 6000 MW propylene oxide polyether triol, ethylene oxide modified, having a hydroxyl number of 28.3, available from Arco Chemical Europe, Maidenhead, England;
(4) 2000 MW polyether diol with approximatively 87% primary hydroxyl content, having a hydroxyl number of 58, available from Olin Corp., Stamford, CT 06904:
(5) Min. 85% analytical reagent phosphoric acid, available from Prolabo, Paris;
(6) 2,2-dimorpholino diethylether, available from Texaco Chemical, Hamburg;
(7) K20 grade soda-lime borosilicate glass bubles (about 60 micrometers in average external diameter) having a specific gravity of 0.20 and a thermal conductivity of 0.03 W/M°C (designated Scotchlite® K-20), available from 3M Company, St.-Paul, MN 55144.

Table 2

| | | Example 1 | |
|---|---|---|---|
| Reagents | Nature | parts by weight | % by weight |
| Formrez ER262 | PBA | 30 | 22.81 |
| Arcol 1072-A | 6000 MW polyether triol | 11.7 | 8.89 |
| Poly G55-56 | 2000 MW polyether diol | 58.3 | 44.32 |
| Desmodur 44M | MDI | 16.20 | 12.32 |
| DMDEE | catalyst | 0.23 | 0.18 |
| Glass bubles K20 | filler | 15 | 11.40 |
| $H_3PO_4$ | phosphoric acid | 0.1 | 0.08 |

Comparative Example 1

The composition was prepared with the components and protocol indicated in table 3 and weight proportions indicated in table 4.

Table 3

| Addition sequence | Amount (grams) | Component |
|---|---|---|
| 1 | 42.2 | Desmodur 44M |
| 2 | 74 | Formez 66-20 [1] |
| 3 | 172 | Poly G55-56 |
| 4 | O.3 | $H_3PO_4$ |
| 5 | 0.56 | DMDEE |
| 6 | 52,5 | K20 Glass bubble |

(1) Adipate polyester diol [poly(1,6 hexane adipates)] having a hydroxyl number of 20.8, available from Witco Corp., Chicago, IL.

Comparative examples

Table 4

| Reagents | Nature | Example 1 | Comparative Ex 1 |
|---|---|---|---|
| Formrez 66-20 [1] | PHA | - | 30 |
| Formrez ER262 | PBA | 30 | - |
| Arcol 1072-A | Polyether triol | 11.7 | - |
| Poly G55-56 | Polyether diol | 58.3 | 70 |
| Desmodur 44M | MDI | 16.2 | 17.13 |
| DMDEE | Catalyst | 0.23 | 0.23 |
| Glass bubblesK20 | Filler | 15(40 %vol.) | 21,35(50 % vol.) |
| $H_3PO_4$ | Phosphoric acid | 0.1 | 0.125 |
| (expressed in parts by weight) | | | |

(1) Adipate polyester diol [poly(1,6 hexane adipates)] having a hydroxyl number of 20.8, available from Witco Corp., Chicago, IL.

The following data were obtained with two compositions:

Table 5

| Tests | | Example 1 | Comparative ex. |
|---|---|---|---|
| Thermal conductivity W/m°C | | 0.163 | 0.16 |
| Heat of crystallisation Joules/g | | - 15.1 | - 18.2 |
| Tack-free time (min) | | 15 | 5 |
| Shore A hardness | . 30 min | 45 | 40 |
| | . 1 h | 55 | 50-55 |
| | . 2 h | - | 55-60 |
| | . 3 h | 65 | 60 |
| | . final | 80 | 80 |
| 180° peel (N/dm) | | 765 | 1 365 |

1) Thermal conductivity (Watts/meter per °C) is measured according to industrial standard ASTM C518 using a Perkin-Elmer series 7 Thermal Analysis System.

2) Heat of crystallisation or ΔH (Joules/gram) means the heat liberated (negative values) or adsorbed (positive values) upon crystallisation of the composition. ΔH is measured in accord with industrial standard ASTM E793 using a Perkin-Elmer series 7 Thermal Analysis System. Heat is absorbed during DSC heating scan and liberated during DSC cooling scan.

3) Brushability time is determined by extruding a series of 15 centimer long beads of sealer onto (methyl ethyl ketone degreased) steel test panels. At various cooling times, the sealer beads were brushed (using a nylon brush available from 3M Company) to produce a 30 mm wide brushed seam.

4) Tack-free time is determined by extruding some beads of sealer onto MEK degreased steel test panels. The sealer is considered as tack-free when there is no further product transfer to the fingers.

5) 180° peel adhesion values were determined as follows. The molten adhesive was uniformly spread on a cold rolled steel test coupon with a tongue depressor. Sufficient adhesive was applied to the coupon to assure that the thickness of the spread layer exceeded 50 micrometers. The test coupons were of 15 x 2.5 cm. The spread adhesive films were allowed to cure for seven (7) days under ambient room conditions approximately 25°C/50% relative humidity). After cure, the molten master batch adhesive was extruded over the cured adhesive test film and a strip of fine mesh stainless steel screen (3.8 by 35 cm) was worked into the molten, unfilled adhesive using a tongue depressor. The fully assembled test specimens were aged under ambient conditions for an additional 7 days to bond the screen to cured adhesive test film. Then, the steel panel was clamped in the fixed (lower) jaws of the Sintech. The strip of stainless steel screen was folded back 180° and the loose end clamped in the movable (upper) jaws of the Sintech. The specimens were "pulled" at a cross-head speed of 5 centimeters per minute. The maximum peel adhesion value was recorded in Newtons per decimeter, as indicated above.

Comparative example 2

This comparative example 2 resumes the composition of comparative example 1 except the volume of glass bubbles. It shows one of the effects of changing the glass bubbles volume loading of the filled adhesive. The amount K-20 glass bubbles were charged in the composition of comparative example 1. The results are shown in table 6. The 180° peel adhesion values are non-tooled peel adhesive values.

Table 6

| Run | % volume loading of glass bubbles | (Non-tooled) 180° peel adhesion (N/dm) |
|---|---|---|
| Comparative ex. 1 | 50 | 1365 |
| Comparative ex. 2 | 40 | 875 |

The formulation of the invention which comprises a polyether triol and only about 40% by volume of glass bubles and a different polyester polyol (PBA instead of PHA) has proved to fulfill various conditions requested in the use of the compositions as far as viscosity and cure time are concerned.

The results show improved tack-free time for the compositions of the present invention, while the 180° peel adhesion has decreased due to lowering the volume of glass bubbles. But this adhesion value above 700 N/dm has proved to be sufficient in practice.

The use of only 40 % of glass bubbles and PBA instead of PHA increases the cure time and time open to handling and toolability. The use of polyether triol in combination with 35 to 45% by volume of glass bubbles allows good mechanical properties of the cured composition to be maintained without too high viscosity of the uncured composition.

**Claims**

1.  A reactive hot melt adhesive and/or sealing composition comprising a blend containing the following components :

    (a) a first isocyanate-terminated prepolymer comprising the reaction product of an essentially semicrystalline hydroxy-functional material and a polyisocyanate, the semicrystalline material comprising a polyester polyol ;
    (b) a second isocyanate-terminated prepolymer comprising the reaction product of a polyether diol and a polyisocyanate, the polyether diol comprising a polyalkylene oxyde glycol ;
    (c) a third isocyanate-terminated prepolymer comprising the reaction product of a polyether triol and a polyisocyanate, the polyether triol comprising a polyalkylene oxyde polyether triol ; and
    (d) cellular objects formed by a material consisting of a material selected from the group consisting of an inorganic silicate and/or an inorganic silica-aluminate alloy, wherein the cellular objects are in an amount of 35 to 45 % by volume based on total volume of the composition, and 8 to 14 % by weight based on the total weight of the composition.

2.  A composition according to claim 1, wherein said polyester polyol is polybutylene adipate (PBA).

3.  A composition according to anyone of claims 1 or 2, wherein the second isocyanate-terminated prepolymer comprises the reaction product of a polyoxy $C_2$-$C_3$ alkylene glycol and a polyisocyanate.

4. A composition according to anyone of claims 1 to 4, wherein the third isocyanate-terminated prepolymer comprises the reaction product of a polyoxy $C_2$-$C_3$ alkylene polyether triol and a polyisocyanate.

5. A composition according to anyone of claims 3 or 4, wherein said polyoxy alkylene is a polyoxy propylene, ethylene oxide modified.

6. A composition according to anyone of claims 1 to 5, wherein the said polyisocyanate is diphenyl methane diisocyanate.

7. A composition according to anyone of claims 1 to 6 wherein said polyether diol or triol and polyester polyol have a number average molecular weight of from 1 000 to 10 000.

8. A composition according to anyone of claims 1 to 7, wherein components (a), (b) and (c) are present in the weight proportions of 6 to 37 % (a), 27 to 80 % (b) + (c), with the proviso that the sum of (a) + (b) + (c) + (d) equals 100 % and the weight ratio of (c)/(b) is 1/5 and (b) + (c)/(a) is greater than 1.2 .

9. A composition according to anyone of claims 1 to 8 wherein said cellular objects have an average particule diameter in the range of 10 to 100 $\mu$ and said wall material has an average thickness of from 0.5 to 2 $\mu$.

10. A composition according to anyone of claims 1 to 9, wherein said wall material includes an alkali borate and said blend further comprises phosphoric acid in an amount effective to neutralize any alkali derivatives formed from said alkali borate.

11. A composition according to anyone of claims 1 to 10, wherein the cellular objects are made of soda-lime borosilicate glass bubles.

12. A composition according to anyone of claims 1 to 11, wherein said composition has a viscosity at 120°C between 30 000 to 100 000 centipoises.

13. A composition according to anyone of claims 1 to 12, wherein said composition further comprises a catalyst.

14. A composition according to claim 13, wherein said composition comprises 4,4'-(oxydi-2,1-ethane diyl) bis-morpholine as catalyst.

15. A composition according to anyone of claims 1 to 14, wherein said first, second and third isocyanate-terminated prepolymer are curable upon exposure to water moisture or water vapor.

16. A composition according to anyone of claims 1 to 15, comprising:

> (a) a first isocyanate-terminated prepolymer comprising the reaction product of an essentially semicrystalline polybutylene adipate and diphenyl methane diisocyanate, the said polybutylene adipate consisting in a FORMREZ ER 262® of 3 000 MW
> (b) a second isocyanate-terminated prepolymer comprising the reaction product of a reactive polyether diol and diphenyl methane diisocyanate, the said polyether diol consisting in a poly G55-56® of 2 000 MW; and
> (c) a third isocyanate-terminated prepolymer comprising the reaction product of a reactive high molecular weight polypropylene oxyde polyether triol and diphenyl methane diisocyanate, the said polypropylene oxyde polyether triol consisting in a ARCOL-1072-A® of 6 000 MW ;
> (d) K20 glass bubbles.

17. A composition according to anyone of claims 1 to 16 obtainable with the polyether polyols and polyester polyol in a weight ratio of 15:85 to 85:15 respectively and preferable 25:75 to 75:25.

18. A composition according to claim 16 or 17 obtainable with the following weight proportions of components : 20 to 25 % of polybutylene adipate, 40 to 50 % of polyether diol, 5 to 10 % of polyether triol, 10 to 15 % of diphenyl methane diisocyanate, 0.1 to 0.3 % of catalyst, 10 to 12 % of K20 Glass bubles, and 0.05 to 0.1 % of phosphoric acid.

## EUROPEAN SEARCH REPORT

| European Patent Office | | Application Number |
|---|---|---|
| | | EP 95 40 2146 |

### DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | EP-A-0 472 278 (LORD CORP) 26 February 1992<br>* claims 1-5,13,14 *<br>* page 4, line 40 - line 57 *<br>--- | 1 | C08G18/12<br>C08G18/40<br>C09J175/04<br>C08K7/26<br>C09K3/10 |
| D,A | EP-A-0 455 400 (MINNESOTA MINING & MFG) 6 November 1991<br>* claims 1-10 *<br>* page 1, line 8 - line 13 *<br>* page 3, line 33 - line 39 *<br>--- | 1 | |
| D,A | WO-A-92 13017 (MINNESOTA MINING & MFG) 6 August 1992<br>* claims 1-10 *<br>--- | 1 | |
| A | AU-A-2 885 977 (F&T PLASTICS) 22 March 1979<br>* claims 1-3 *<br>* example 2 *<br>----- | 1 | |
| | | | **TECHNICAL FIELDS SEARCHED (Int.Cl.6)**<br>C08G<br>C08K<br>C09J<br>C09K<br>C09D |

The present search report has been drawn up for all claims

| Place of search | Date of completion of the search | Examiner |
|---|---|---|
| THE HAGUE | 15 February 1996 | Van Puymbroeck, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)